# EUROPEAN PATENT APPLICATION

(11) **EP 4 834 807 A1**
(43) Date of publication of application: **04.11.2026**
(21) Application number: 25752307.6
(22) Date of filing: 23.01.2025
(51) Int. Cl.: B65G 29/00, F16H 25/20, F16H 25/14, H01M 10/04

(54) **ROTARY TRANSFER DEVICE**

(30) Priority: 05.02.2024 KR 20240017547
(71) Applicant: LG Energy Solution, Ltd., Seoul 07335 (KR)
(72) Inventor: LEE, Gi Yeon, Daejeon 34122 (KR); HAN, Myoung Dae, Daejeon 34122 (KR); SHIM, Kyuhun, Daejeon 34122 (KR)
(74) Representative: Goddar, Heinz J.
(86) International application number: PCT/KR2025/001319
(87) International publication number: WO 2025/170259

(57) **Abstract**

The present invention provides a rotary transfer device (50) comprising: a rotary plate (500) configured to rotate around a virtual first rotation axis (A1); one or more rotary transfer units (600) comprising a movable member (610) installed on the rotating plate (500) so as to rotate together with the rotating plate (500), each movable member (610) being installed on the rotating plate (500) to be able to move to one side or the other side in the radial direction around the first rotation axis (A1), a rotary member (620) installed on the rotary plate (500) to be able to rotate around a virtual second rotation axis (A2) which intersects with the first rotation axis (A1), and a rotation conversion means (630) for converting movements of the movable member (610) into rotations of the rotary member (620); and a displacement means (700) configured such that, when the movable member (610) of each of the one or more rotary transfer units (600) rotates together with the rotary plate (500), each movable member (610) is moved to one side or the other side in the radial direction.

## Description

### [TECHNICAL FIELD]

This application claims the benefit of priority based on Korean Patent Application No. 10-2024-0017547 filed on February 5, 2024, entire content disclosed in the document of the patent applications is comprised as a part of this specification.

The present invention relates to a rotary transfer device that may be easily implemented at low cost with a simple configuration, and that facilitates manufacture and maintenance despite the increase in the number of rotary transport units, reduces manufacturing and maintenance costs, improves usability and compatibility, allows precise adjustment of the rotation angle, and reduces movement and rotation errors.

### [BACKGROUND ART]

When manufacturing secondary batteries, it is necessary to rotate and transport the object to be processed in an optimal state suitable for the assembly work of the next process.

An example of such a battery transport device is disclosed in Korean Patent No. 10-1764668 (Rotary Transfer Device of Battery Parts).

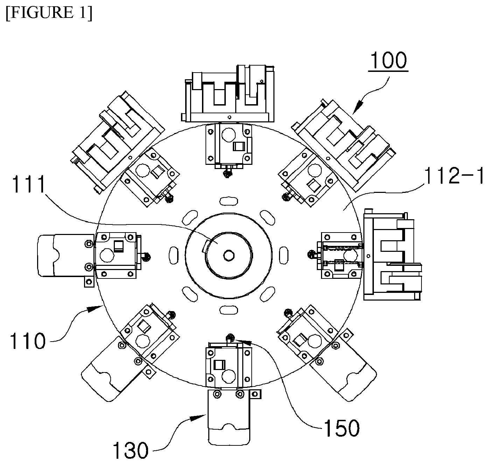

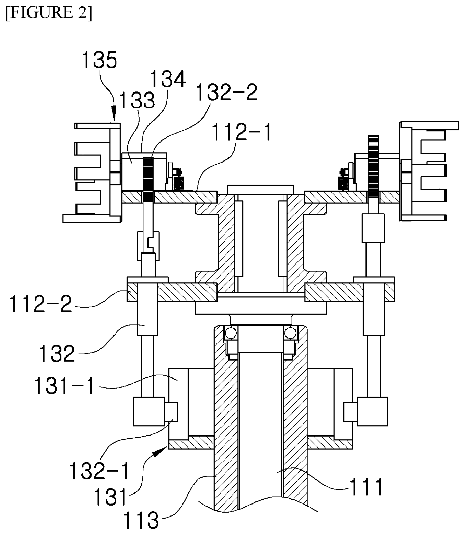

Referring to FIGS. 1 and 2, the conventional battery transport device may include a rotary unit 110 and a plurality of rotary transport units 130 for object to be processed.

The rotary unit 110 may include a rotation axis 111 and upper and lower rotational disks 112-1 and 112-2. The rotation axis 111 may be installed vertically and may rotate. The upper and lower rotational disks 112-1 and 112-2 may be installed at a predetermined distance from each other at the upper end of the rotation axis 111 and rotate together with the rotation axis 111.

The plurality of rotary transport units 130 for object to be processed may be installed at constant intervals along the upper rotational disk 112-1 so as to rotate together with the upper and lower rotational disks 112-1 and 112-2. In addition, a plurality of rotary transport units 130 for object to be processed may be rotated by the driving force transmitted from the rotation axis 111 to switch to a 90 degree or 180 degree position suitable for the next process and transfer the objects to be processed accommodated in and supported by a receptor.

Each of the plurality of rotary transport units 130 may include: a cylindrical cam 131; a rack gear 132-2; and a support member 135 for object to be processed.

The cylindrical cam 131 has a curved cam surface and is installed integrally at the rotation axis 111 so as to rotate together with the rotation axis 111.

The rack gear 132-2 may be vertically installed to be able to move up and down through the upper and lower rotary disks 112-1 and 112-2. The lower end of the rack gear 132-2 may be in rolling contact so as to move along the curved cam surface of the cylindrical cam 131. The upper end of the rack gear 132-2 may be installed so as to protrude from the upper rotary disk 112-1.

The pinion gear 133 may be rotatably supported within the support casing 134 that is fixed to and supported by the upper rotary disk 112-1. The pinion gear 133 may be engaged with the rack gear 132-2.

The support member 135 for the object to be processed may be installed so as to integrally rotate with the pinion gear 133. The receptor may be installed at the support member 135.

However, conventionally, the cylindrical cam 131 has a vertical cam structure provided along the outer circumferential surface of the rotation axis 111. When the cylindrical cam 131 is installed at the outer circumferential surface of the rotation axis 111, maintenance of the rotational transport device 100 is difficult and the cylindrical cam 131 may interfere with other devices, because generally other devices are installed at the rotation axis 111. In addition, as the number of rotary transport units 130 increases, multiple rack gears 132-2 are densely arranged around the rotation axis 111, making the maintenance thereof difficult.

A pertinent prior art is Korean Patent No. 10-1764668.

### [DISCLOSURE]

### [TECHNICAL PROBLEM]

In order to solve above-described problems, it is an object of the present invention to provide a rotary transfer device that may be easily implemented at low cost with a simple configuration.

It is an object of the present invention to provide a rotary transfer device that facilitates manufacture and maintenance, and reduces manufacturing and maintenance costs.

It is an object of the present invention to provide a rotary transfer device that provides improved usability and compatibility.

It is an object of the present invention to provide a rotary transfer device that facilitates manufacture and maintenance despite the increase in the number of rotary transport units.

It is an object of the present invention to provide a rotary transfer device that has improved structural stability and durability.

It is an object of the present invention to provide a rotary transfer device that allows precise adjustment of the rotation angle and reduced movement and rotation errors.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a rotary transfer device 50 including: a rotary plate 500; one or more rotary transport units 600; and a displacement means 700.

The rotary plate 500 may rotate about a virtual first rotation axis A1.

The one or more rotary transport units 600 may be installed at the rotary plate 500.

The one or more rotary transport units 600 may rotate together with the rotary plate 500.

Each of the one or more rotary transport units 600 may include: a moving member 610; a rotary member 620; and a rotation conversion means 630.

The moving member 610 may be installed at the rotary plate 500 to be movable to one side or other side in a radial direction centered on the first rotation axis A1.

The rotary member 620 may be installed at the rotary plate 500 to be rotatable about a virtual second rotation axis A2 extending in a direction intersecting the first rotation axis A1.

The rotation conversion means 630 may convert movement of the moving member 610 into rotation of the rotary member 620.

The displacement means 700 may move each of the moving members 610 to one side or other side in the radial direction when the moving member 610 of each of the one or more rotary transport units 600 rotates with the rotary plate 500.

In one embodiment, the extending direction of the second rotation axis A2 may be perpendicular to the first rotation axis A1.

The moving member 610 may move to one side or other side in the radial direction while moving in a direction parallel to the second rotation axis A2.

In one embodiment, the second rotation axis A2 may meet the first rotation axis A1. The moving member 610 may move in the radial direction.

In one embodiment, the rotation conversion means 630 may include: a ball screw bolt 632; a ball screw nut 634; and a first support member 636.

The ball screw bolt 632 may be coupled to the moving member 610.

The ball screw bolt 632 may move together with the moving member 610 to one side or other side in the radial direction.

The ball screw bolt 632 may have threads formed on an outer circumferential surface thereof.

The ball screw nut 634 may be threadedly engaged with the ball screw bolt 632.

The ball screw nut 634 may be coupled to the rotary member 620.

The first support member 636 may be coupled to the rotary plate 500.

The first support member 636 may rotatably support the ball screw nut 634.

When the ball screw bolt 632 moves together with the moving member 610 to one side or other side in the radial direction, the ball screw nut 634 may rotate about the second rotation axis A2 along the threads and the rotary member 620 may rotate together with the ball screw nut 634.

In one embodiment, the displacement means 700 may include a cam member 710 fixed or rotating at a different speed from the rotary plate 500.

The cam member 710 may move each of the moving members 610 to one side or other side in the radial direction when the moving member 610 of each of the one or more rotary transport units 600 rotates together with the rotary plate 500.

In one embodiment, the cam member 710 may be installed at or adjacent to the rotary plate 500.

The cam member 710 may include a cam groove 712 where the moving member 610 is inserted.

The cam groove 712 may have a varying distance from the first rotation axis A1 according to angular positions about the first rotation axis A1.

Accordingly, the cam groove 712 may move each of the moving members 610 to one side or other side in the radial direction when the moving member 610 of each of the one or more rotary transport units 600 rotates together with the rotary plate 500.

In one embodiment, the cam groove 712 may have the circular shape eccentric with respect to the first rotation axis A1.

In one embodiment, the first rotation axis A1 may extend vertically.

The one or more rotary transport units 600 and the cam member 710 may be installed at an upper portion of the rotary plate 500.

The cam groove 712 may be formed on the upper surface of the cam member 710.

In one embodiment, each of the one or more rotary transport units 600 may include an elastic member 640.

The elastic member 640 may apply pressure to the moving member 610 to other side or one side in the radial direction such that the moving member 610 may be in close contact with the cam member 710.

In one embodiment, the rotation conversion means 630 may include: the ball screw bolt 632; the ball screw nut 634; and the first support member 636.

The ball screw bolt 632 may be coupled to the moving member 610.

The ball screw bolt 632 may move together with the moving member 610 to one side or other side in the radial direction.

The ball screw bolt 632 may have threads formed on an outer circumferential surface thereof.

The ball screw nut 634 may be threadedly engaged with the ball screw bolt 632.

The ball screw nut 634 may be coupled to the rotary member 620.

The first support member 636 may be coupled to the rotary plate 500.

The first support member 636 may rotatably support the ball screw nut 634.

When the ball screw bolt 632 moves together with the moving member 610 to one side or other side in the radial direction, the ball screw nut 634 may rotate about the second rotation axis A2 along the threads and the rotary member 620 may rotate together with the ball screw nut 634.

The elastic member 640 may be disposed between the moving member 610 and the first support member 636.

In one embodiment, the displacement means 700 may include one or more guide surfaces 736 rotating together with the rotary plate 500.

Each of the one or more guide surfaces 736 may extend to one side or other side in the radial direction.

Each of the one or more guide surfaces 736 may guide the movement of the moving member 610 of each of the one or more rotary transport units 600 to one side or other side in the radial direction.

In one embodiment, each of the one or more guide surfaces 736 may be capable of applying pressure to the moving member 610 of each of the one or more rotary transport units 600 in the circumferential direction surrounding the first rotation axis A1.

In one embodiment, the displacement means 700 may include a second support member 730 having the ring shape.

The second support member 730 may be installed at the rotary plate 500.

The second support member 730 may rotate together with the rotary plate 500.

The second support member 730 may include the one or more guide surfaces 736.

In one embodiment, the displacement means 700 may include a cam member 710 fixed or rotating at a different speed from the rotary plate 500.

The cam member 710 may move each of the moving members 610 to one side or other side in the radial direction when the moving member 610 of each of the one or more rotary transport units 600 rotates together with the rotary plate 500.

The cam member 710 may be installed at or adjacent to the rotary plate 500.

The cam member 710 may include a cam groove 712 where the moving member 610 is inserted.

The cam groove 712 may have a varying distance from the first rotation axis A1 according to angular positions about the first rotation axis A1.

Accordingly, The cam groove 712 may move each of the moving members 610 to one side or other side in the radial direction when the moving member 610 of each of the one or more rotary transport units 600 rotates together with the rotary plate 500.

The first rotation axis A1 may extend vertically.

The one or more rotary transport units 600 and the cam member 710 may be installed at an upper portion of the rotary plate 500.

The cam groove 712 may be formed on the upper surface of the cam member 710.

The second support member 730 may include: a support 732; and a cover 734.

The support 732 may be disposed radially outer than the cam member 710.

The cover 734 may extend radially inward from the support 732.

The cover 734 may be disposed above the cam groove 712.

The cover 734 may include the one or more guide surfaces 736.

### [ADVANTAGEOUS EFFECTS]

According to the embodiments of the present invention, a rotary transfer device may include: a rotary plate 500 rotating about a virtual first rotation axis A1; one or more rotary transport units 600 installed at and rotating together with the rotary plate 500, each of the one or more rotary transport units 600 comprising: a moving member 610 installed at the rotary plate 500 to be movable to one side or other side in a radial direction centered on the first rotation axis A1; a rotary member 620 installed at the rotary plate 500 to be rotatable about a virtual second rotation axis A2 extending in a direction intersecting the first rotation axis A1; and a rotation conversion means 630 converting movement of the moving member 610 into rotation of the rotary member 620; and displacement means 700 moving each of the moving members 610 to one side or other side in the radial direction when the moving member 610 of each of the one or more rotary transport units 600 rotates with the rotary plate 500.

Accordingly, the rotary transfer device 50 may include: a rotary plate 500; one or more rotary transport units 600; and displacement means 700. Accordingly, the rotary transfer device 50 may be easily implemented at low cost with a simple configuration.

In addition, unlike the conventional one, the rotation conversion means 630 of the one or more rotary transport units 600 and displacement means 700 may be installed at the rotary plate 500 of a large diameter rather than a rotation axis of a small diameter such that the manufacturing and maintenance of the rotary transfer device 50 may be facilitated, and the manufacturing and maintenance costs of the rotary transfer device 50 may be reduced. In particular, even when the number of rotary transport units 600 increases, the manufacturing and maintenance of the rotary transfer device 50 may be facilitated.

In addition, since the moving member 610 etc. are installed at the rotary plate 500, the rotary transfer device 50 is not installed at the rotation axis (shaft) that rotates the rotary plate 500. Therefore, the rotary transfer device 50 may be installed and used without interference with other devices that utilize the rotation axis (shaft). That is, the usability and compatibility of the rotary transfer device 50 may be improved.

In addition, since the moving member 610 of each of the one or more rotary transport units 600 moves to one side or other side in the radial direction rather than the axial direction of the first rotation axis A1, the rotation conversion means 630 of each of the one or more rotary transport units 600 may be arranged radially in the radial direction (e.g., centrifugal direction) rather than the axial direction of the first rotation axis A1. As a result, since the distance between the circumferentially adjacent rotation conversion means 630 of the rotary transport units 600 may be increased, the manufacturing and maintenance of the rotary transfer device 50 may be facilitated, and the manufacturing and maintenance costs of the rotary transfer device 50 may be reduced. In particular, even when the number of rotary transport units 600 increases, the manufacturing and maintenance of the rotary transfer device 50 may be facilitated.

According to the embodiments of the present invention, the extending direction of the second rotation axis A2 may be perpendicular to the first rotation axis A1. The moving member 610 may move to one side or other side in the radial direction while moving in a direction parallel to the second rotation axis A2.

Accordingly, the structural stability and durability of the rotary transfer device 50 may be improved, and the rotation angle of the rotary member 620 according to the movement of the moving member 610 may be precisely adjusted.

According to the embodiments of the present invention, the second rotation axis A2 may meet the first rotation axis A1. The moving member 610 may move in the radial direction.

Accordingly, the structural stability and durability of the rotary transfer device 50 may be improved, and the rotation angle of the rotary member 620 according to the movement of the moving member 610 may be precisely adjusted.

According to embodiments of the present invention, the rotation conversion means 630 may include: a ball screw bolt 632 coupled to the moving member 610, moving together with the moving member 610 to one side or other side in the radial direction, and having threads formed on an outer circumferential surface thereof; a ball screw nut 634 threadedly engaged with the ball screw bolt 632 and coupled to the rotary member 620; and a first support member 636 coupled to the rotary plate 500 and rotatably supporting the ball screw nut 634. When the ball screw bolt 632 moves together with the moving member 610 to one side or other side in the radial direction, the ball screw nut 634 may rotate about the second rotation axis A2 along the threads and the rotary member 620 may rotate together with the ball screw nut 634.

Accordingly, the rotation conversion means 630 may be easily implemented at low cost with a simple configuration. In addition, since the rotation angle of the rotary member 620 is proportional to the pitch of the threads of the ball screw bolt 632, the rotation angle of the rotary member 620 may be precisely adjusted according to the movement of the moving member 610. In addition, since the ball screw bolt 632 moves on the rotation axis of the rotary member 620, the structural stability and durability of the rotary transfer device 50 may be improved, and the rotation angle of the rotary member 620 according to the movement of the moving member 610 may be precisely adjusted.

According to embodiments of the present invention, the displacement means 700 may include a cam member 710 fixed or rotating at a different speed from the rotary plate 500. The cam member 710 may move each of the moving members 610 to one side or other side in the radial direction when the moving member 610 of each of the one or more rotary transport units 600 rotates together with the rotary plate 500.

Accordingly, the displacement means 700 may be easily implemented at low cost with a simple configuration.

According to embodiments of the present invention, the cam member 710 may be installed at or adjacent to the rotary plate 500 and may include a cam groove 712 where the moving member 610 is inserted. The cam groove 712 may have a varying distance from the first rotation axis A1 according to angular positions about the first rotation axis A1, thereby moving each of the moving members 610 to one side or other side in the radial direction when the moving member 610 of each of the one or more rotary transport units 600 rotates together with the rotary plate 500.

Accordingly, the displacement means 700 may be easily implemented at low cost with a simple configuration.

According to embodiments of the present invention, the cam groove 712 may have a circular shape eccentric with respect to the first rotation axis A1.

Accordingly, the rotational period of the rotary plate 500 with respect to the cam member 710 may correspond to the rotational period of the rotary member 620.

According to the embodiments of the present invention, the first rotation axis A1 may extend vertically. The one or more rotary transport units 600 and the cam member 710 may be installed at an upper portion of the rotary plate 500. The cam groove 712 may be formed on the upper surface of the cam member 710.

Accordingly, the stability and durability of the rotary transfer device 50 may be improved.

According to the embodiments of the present invention, each of the one or more rotary transport units 600 may include an elastic member 640 applying pressure to the moving member 610 to other side or one side in the radial direction such that the moving member 610 is in close contact with the cam member 710.

Accordingly, the moving member 610 may move along the shape or outline of a predetermined portion (e.g., the cam groove) of the cam member 710 while being in close contact with the predetermined portion. Accordingly, the movement error of the moving member 610 to one side or other side in the radial direction may be reduced, and accordingly, the rotation error of the rotary member 620 may be reduced, and the rotation angle of the rotary member 620 may be precisely adjusted.

According to embodiments of the present invention, the rotation conversion means 630 may include: a ball screw bolt 632 coupled to the moving member 610, moving together with the moving member 610 to one side or other side in the radial direction, and having threads formed on an outer circumferential surface thereof; a ball screw nut 634 threadedly engaged with the ball screw bolt 632 and coupled to the rotary member 620; and a first support member 636 coupled to the rotary plate 500 and rotatably supporting the ball screw nut 634. When the ball screw bolt 632 moves together with the moving member 610 to one side or other side in the radial direction, the ball screw nut 634 may rotate about the second rotation axis A2 along the threads and the rotary member 620 may rotate together with the ball screw nut 634. The elastic member 640 may be disposed between the moving member 610 and the first support member 636.

Accordingly, a rotary transfer device 50 with reduced movement error of the moving member 610 and rotation error of the rotary member 620 may be easily implemented with a simple configuration.

According to embodiments of the present invention, the displacement means 700 may include one or more guide surfaces 736 rotating together with the rotary plate 500. Each of the one or more guide surfaces 736 may extend to one side or other side in the radial direction and guide the movement of the moving member 610 of each of the one or more ro tary transport units 600 to one side or other side in the radial direction.

Accordingly, the stability and durability of the rotary transfer device 50 may be improved.

According to the embodiments of the present invention, each of the one or more guide surfaces 736 may be capable of applying pressure to the moving member 610 of each of the one or more rotary transport units 600 in the circumferential direction surrounding the first rotation axis A1.

Accordingly, the stability and durability of the rotary transfer device 50 may be improved.

According to embodiments of the present invention, the displacement means 700 may include a second support member 730 having a ring shape, and installed at and rotating together with the rotary plate 500. The second support member 730 may include the one or more guide surfaces 736.

Accordingly, the one or more guide surfaces 736 may be easily implemented at low cost with a simple configuration.

According to embodiments of the present invention, the displacement means 700 may include a cam member 710 fixed or rotating at a different speed from the rotary plate 500. The cam member 710 may move each of the moving members 610 to one side or other side in the radial direction when the moving member 610 of each of the one or more rotary transport units 600 rotates together with the rotary plate 500. The cam member 710 may be installed at or adjacent to the rotary plate 500, and may include a cam groove 712 where the moving member 610 is inserted. The cam groove 712 may have a varying distance from the first rotation axis A1 according to angular positions about the first rotation axis A1. Accordingly, the cam groove 712 may move each of the moving members 610 to one side or other side in the radial direction when the moving member 610 of each of the one or more rotary transport units 600 rotates together with the rotary plate 500. The first rotation axis A1 may extend vertically. The one or more rotary transport units 600 and the cam member 710 may be installed at an upper portion of the rotary plate 500. The cam groove 712 may be formed on the upper surface of the cam member 710. The second support member 730 may include: a support 732 disposed radially outer than the cam member 710; and a cover 734 extending radially inward from the support 732, disposed above the cam groove 712 and including the one or more guide surfaces 736.

Accordingly, the displacement means 700 including the second support member 730 may be easily implemented at low cost with a simple configuration. In addition, the stability and durability of the rotary transfer device 50 may be improved.

In addition to the advantageous effects described above, specific effects of the present invention will be described further while describing specific details of the present invention.

### [BRIEF DESCRIPTION OF DRAWINGS]

FIGS. 1 and 2 are plan and cross-sectional views illustrating a conventional rotary transfer device, respectively.
FIG. 3 is a cross-sectional view schematically illustrating a rotary transfer device according to an embodiment of the present invention.

**[DESCRIPTION OF REFERENCE NUMERALS]**

| | | | |
|---|---|---|---|
| 50: | rotary transfer device | | |
| 500: | rotary plate | | |
| 600: | rotary transport unit | | |
| 610: | moving member | 620: | rotary member |
| 630: | rotation conversion means | | |
| 632: | ball screw bolt | 634: | ball screw nut |
| 636: | first support member | 637: | brace |
| 638: | coupler | | |
| 640: | elastic member | | |
| 700: | displacement means | | |
| 710: | cam member | 712: | cam groove |
| 720: | housing connecting body | 730: | second support member |
| 732: | support | 734: | cover |
| 736: | guide surface | | |

### [REPRESENTATIVE FIGURE]

FIG. 3

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, arranging an element at "upper portion (or lower portion)" of an element or arranging an element "above (or below)" of an element refers to not only arranging an element to be in contact with upper surface (or lower surface) but also to arranging an element above upper surface (or lower surface) with another element interposed therebetween.

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

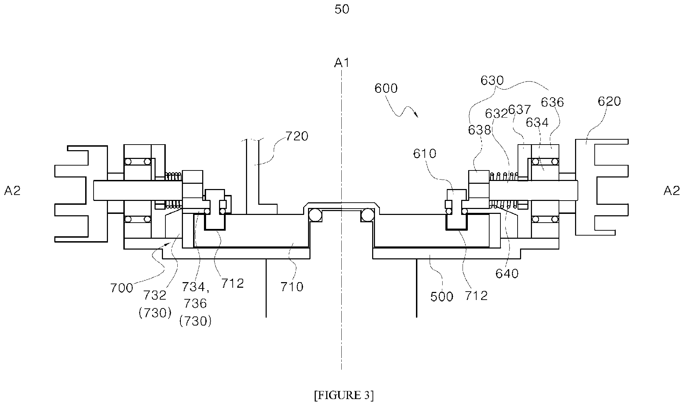

FIGS. 1 and 2 are plan and cross-sectional views illustrating a conventional rotary transfer device, respectively. FIG. 3 is a cross-sectional view schematically illustrating a rotary transfer device according to an embodiment of the present invention.

### [ROTARY TRANSFER DEVICE]

Referring to FIG. 3, a rotary transfer device 50 according to an embodiment may include: a rotary plate 500; one or more rotary transport units 600; and displacement means 700.

The rotary plate 500 may rotate about a virtual first rotation axis A1. The first rotation axis A1 may extend vertically.

One or more rotary transport units 600 may be installed at the rotary plate 500. The one or more rotary transport units 600 may be installed at an upper portion of the rotary plate 500. The one or more rotary transport units 600 may rotate together with the rotary plate 500.

Each of the one or more rotary transport units 600 may include: a moving member 610; a rotary member 620; and a rotation conversion means 630. Each of the one or more rotary transport units 600 may include an elastic member 640.

In each of the one or more rotary transport units 600, the moving member 610, the rotation conversion means 630 and the rotary member 620 may be arranged in order from radially inward to outward.

The moving member 610 may be installed at the rotary plate 500 to be movable to one side or other side in a radial direction centered on the first rotation axis A1. The radial direction centered on the first rotation axis A1 (referred to as "radial direction" hereinafter) may be a direction toward or away from the first rotation axis A1 along a straight line passing through the first rotation axis A1 on a plane perpendicular to the first rotation axis A1.

When the extending direction of the second rotation axis A2 described below is perpendicular to the first rotation axis A1, the moving member 610 may move to one side or other side in the radial direction while moving in a direction parallel to the second rotation axis A2.

Accordingly, the structural stability and durability of the rotary transfer device 50 may be improved, and the rotation angle of the rotary member 620 according to the movement of the moving member 610 may be precisely adjusted.

When the extending direction of the second rotation axis A2 is perpendicular to the first rotation axis A1 and the second rotation axis A2 meets the first rotation axis A1, the moving member 610 may move in the radial direction.

Accordingly, the structural stability and durability of the rotary transfer device 50 may be improved, and the rotation angle of the rotary member 620 according to the movement of the moving member 610 may be precisely adjusted.

The rotary member 620 may be installed at the rotary plate 500 to be rotatable about a virtual second rotation axis A2 extending in a direction intersecting the first rotation axis A1.

The extending direction of the second rotation axis A2 may be perpendicular to the first rotation axis A1. Here, the second rotation axis A2 may meet the first rotation axis A1. That is, the extending direction of the second rotation axis A2 may be the radial direction.

An object to be rotatively transported may be installed at the rotary member 620. The rotary member 620 may fix the object to be rotatively transported. The rotary member 620 may rotate the object to be rotatively transported about the second rotation axis A2.

### [ROTATION CONVERSION MEANS]

The rotation conversion means 630 may convert the movement of the moving member 610 into the rotation of the rotary member 620.

The rotation conversion means 630 may include: a ball screw bolt 632; a ball screw nut 634; and a first support member 636. The rotation conversion means 630 may include a coupler 638.

The ball screw bolt 632 may be coupled to the moving member 610. The ball screw bolt 632 may move together with the moving member 610 to one side or other side in the radial direction. The ball screw bolt 632 may have threads formed on an outer circumferential surface thereof.

The ball screw nut 634 may be threadedly engaged with the ball screw bolt 632. The ball screw nut 634 may be coupled to the rotary member 620.

The first support member 636 may be coupled to the rotary plate 500. The first support member 636 may rotatably support the ball screw nut 634 to allow the ball screw nut 634 to rotate.

When the ball screw bolt 632 moves together with the moving member 610 to one side or other side in the radial direction, the ball screw nut 634 may rotate about the second rotation axis A2 along the threads. As a result, the rotary member 620 may rotate together with the ball screw nut 634.

Accordingly, the rotation conversion means 630 may be easily implemented at low cost with a simple configuration. In addition, since the rotation angle of the rotary member 620 is proportional to the pitch of the threads of the ball screw bolt 632, the rotation angle of the rotary member 620 may be precisely adjusted according to the movement of the moving member 610. In addition, since the ball screw bolt 632 moves on the rotation axis of the rotary member 620, the structural stability and durability of the rotary transfer device 50 may be improved, and the rotation angle of the rotary member 620 according to the movement of the moving member 610 may be precisely adjusted.

The first support member 636 may be provided with a brace 637. The brace 637 may be disposed between the moving member 610 or the coupler 638 described below and the ball screw nut 634. The brace 637 may surround the ball screw bolt 632.

The coupler 638 may be coupled to the moving member 610 and the ball screw bolt 632. The coupler 638 may connect the moving member 610 and the ball screw bolt 632.

The elastic member 640 may apply pressure to the moving member 610 to other side or one side in the radial direction such that the moving member 610 is in close contact with a cam member 710 described later. Specifically, for example, when the moving member 610 of each of the one or more rotary transport units 600 rotates together with the rotary plate 500, the cam member 710 described later may move the moving member 610 to one side or other side in the radial direction. Here, the elastic member 640 may apply pressure to the moving member 610 to other side or one side in the radial direction such that each of the moving members 610 moves to one side or other side in the radial direction while being in close contact with the cam member 710. That is, the elastic member 640 may apply pressure to the moving member 610 to a side opposite to one side or other side in the radial direction to which the cam member 710 applies pressure to the moving member 610.

Accordingly, the moving member 610 may move along the shape or outline of a predetermined portion (e.g., the cam groove) of the cam member 710 while being in close contact with the predetermined portion. Accordingly, the movement error of the moving member 610 to one side or other side in the radial direction may be reduced, and accordingly, the rotation error of the rotary member 620 may be reduced, and the rotation angle of the rotary member 620 may be precisely adjusted.

The elastic member 640 may be disposed between the moving member 610 and the first support member 636. For example, the elastic member 640 may be disposed between the coupler 638 and the first support member 636. For example, the elastic member 640 may be disposed between the coupler 638 and the brace 637.

Accordingly, a rotary transfer device 50 with reduced movement error of the moving member 610 and rotation error of the rotary member 620 may be easily implemented with a simple configuration.

The elastic member 640 may be disposed to surround the ball screw bolt 632 between the moving member 610 or coupler 638 and the first support member 636 or the brace 637.

### [DISPLACEMENT MEANS]

The displacement means 700 may move each of the moving members 610 to one side or other side in the radial direction when the moving member 610 of each of the one or more rotary transport units 600 rotates with the rotary plate 500.

Accordingly, the rotary transfer device 50 may include: a rotary plate 500; one or more rotary transport units 600; and displacement means 700. Accordingly, the rotary transfer device 50 may be easily implemented at low cost with a simple configuration.

In addition, unlike the conventional one, the rotation conversion means 630 of the one or more rotary transport units 600 and displacement means 700 may be installed at the rotary plate 500 of a large diameter rather than a rotation axis of a small diameter such that the manufacturing and maintenance of the rotary transfer device 50 may be facilitated, and the manufacturing and maintenance costs of the rotary transfer device 50 may be reduced. In particular, even when the number of rotary transport units 600 increases, the manufacturing and maintenance of the rotary transfer device 50 may be facilitated.

In addition, since the moving member 610 etc. are installed at the rotary plate 500, the rotary transfer device 50 is not installed at the rotational axis (shaft) that rotates the rotary plate 500. Therefore, the rotary transfer device 50 may be installed and used without interference with other devices that utilize the rotational axis (shaft). That is, the usability and compatibility of the rotary transfer device 50 may be improved.

In addition, since the moving member 610 of each of the one or more rotary transport units 600 moves to one side or other side in the radial direction rather than the axial direction of the first rotation axis A1, the rotation conversion means 630 of each of the one or more rotary transport units 600 may be arranged radially in the radial direction (e.g., centrifugal direction) rather than the axial direction of the first rotation axis A1. As a result, since the distance between the circumferentially adjacent rotation conversion means 630 of the rotary transport units 600 may be increased, the manufacturing and maintenance of the rotary transfer device 50 may be facilitated, and the manufacturing and maintenance costs of the rotary transfer device 50 may be reduced. In particular, even when the number of rotary transport units 600 increases, the manufacturing and maintenance of the rotary transfer device 50 may be facilitated.

The displacement means 700 may include a cam member 710. The displacement means 700 may include a housing connecting body 720. The displacement means 700 may include a second support member 730.

The cam member 710 may be installed at the rotary plate 500 or installed adjacent to the rotary plate 500. The cam member 710 may be installed at an upper portion of the rotary plate 500. The cam member 710 may be fixed or may rotate at a different speed from the rotary plate 500.

The cam member 710 may move each of the moving members 610 to one side or other side in the first radial direction when the moving member 610 of each of the one or more rotary transport units 600 rotates together with the rotary plate 500.

Accordingly, the displacement means 700 may be easily implemented at low cost with a simple configuration.

The cam member 710 may have a disk shape or a ring shape. The cam member 710 may include a cam groove 712.

The moving member 610 may be inserted in the cam groove 712. The cam groove 712 may have a varying distance from the first rotation axis A1 according to angular positions about the first rotation axis A1. As a result, the cam groove 712 may move each of the moving members 610 to one side or other side in the radial direction when the moving member 610 of each of the one or more rotary transport units 600 rotates together with the rotary plate 500.

Accordingly, the displacement means 700 may be easily implemented at low cost with a simple configuration.

The cam groove 712 may have a circular shape eccentric with respect to the first rotation axis A1.

Accordingly, the rotational period of the rotary plate 500 with respect to the cam member 710 may correspond to the rotational period of the rotary member 620.

When the first rotation axis A1 extends vertically and the one or more rotary transport units 600 and the cam member 710 are installed at an upper portion of the rotary plate 500, the cam groove 712 may be formed on the upper surface of the cam member 710.

Accordingly, the stability and durability of the rotary transfer device 50 may be improved.

The housing connecting body 720 may connect the cam member 710 to the housing. Accordingly, the cam member 710 may be fixed to the housing.

The second support member 730 may be installed at the rotary plate 500. The second support member 730 may rotate together with the rotary plate 500. The second support member 730 may have an overall ring shape.

The second support member 730 may include one or more holes. The second support member 730 may include a support 732 and a cover 734. The second support member 730 may include one or more guide surfaces 736.

The one or more rotary transport units 600 may be inserted in the one or more holes, respectively.

The support 732 may be disposed radially outer than the cam member 710.

The cover 734 may extend radially inward from the support 732. As described above, when the first rotation axis A1 extends vertically, the one or more rotary transport units 600 and the cam member 710 are installed at an upper portion of the rotary plate 500 and the cam groove 712 is formed on the upper surface of the cam member 710, the cover 734 may be disposed above the cam groove 712. The cover 734 may include the one or more guide surfaces 736 described below.

Accordingly, the displacement means 700 including the second support member 730 may be easily implemented at low cost with a simple configuration. In addition, the stability and durability of the rotary transfer device 50 may be improved.

The one or more guide surfaces 736 may be one side or other side inner surface in a circumferential direction of the above-described one or more holes provided in the second support member 730.

Accordingly, the one or more guide surfaces 736 may be easily implemented at low cost with a simple configuration.

The one or more guide surfaces 736 may rotate together with the rotary plate 500.

Each of the one or more guide surfaces 736 may extend to one side or other side in the radial direction. Each of the one or more guide surfaces 736 may guide the movement of the moving member 610 of each of the one or more rotary transport units 600 to one side or other side in the radial direction.

Accordingly, the stability and durability of the rotary transfer device 50 may be improved.

Each of the one or more guide surfaces 736 may apply pressure to the moving member 610 of each of the one or more rotary transport units 600 in the circumferential direction surrounding the first rotation axis A1.

Accordingly, the stability and durability of the rotary transfer device 50 may be improved.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A rotary transfer device comprising:
a rotary plate 500 rotating about a virtual first rotation axis A1;
one or more rotary transport units 600 installed at and rotating together with the rotary plate 500, each of the one or more rotary transport units 600 comprising: a moving member 610 installed at the rotary plate 500 to be movable to one side or other side in a radial direction centered on the first rotation axis A1; a rotary member 620 installed at the rotary plate 500 to be rotatable about a virtual second rotation axis A2 extending in a direction intersecting the first rotation axis A1; and rotation conversion means 630 converting movement of the moving member 610 into rotation of the rotary member 620; and
displacement means 700 moving each of the moving members 610 to one side or other side in the radial direction when the moving member 610 of each of the one or more rotary transport units 600 rotates with the rotary plate 500.

2. The rotary transfer device of claim 1, wherein the extending direction of the second rotation axis A2 is perpendicular to the first rotation axis A1, and
the moving member 610 moves to one side or other side in the radial direction while moving in a direction parallel to the second rotation axis A2.

3. The rotary transfer device of claim 2, wherein the second rotation axis A2 meets the first rotation axis A1, and
the moving member 610 moves in the radial direction.

4. The rotary transfer device of any one of claims 1 to 3, wherein the rotation conversion means 630 comprises: a ball screw bolt 632 coupled to the moving member 610, moving together with the moving member 610 to one side or other side in the radial direction, and having threads formed on an outer circumferential surface thereof; a ball screw nut 634 threadedly engaged with the ball screw bolt 632 and coupled to the rotary member 620; and a first support member 636 coupled to the rotary plate 500 and rotatably supporting the ball screw nut 634, and
the ball screw nut 634 rotates about the second rotation axis A2 along the threads and the rotary member 620 rotates together with the ball screw nut 634 when the ball screw bolt 632 moves together with the moving member 610 to one side or other side in the radial direction.

5. The rotary transfer device of any one of claims 1 to 3, wherein the displacement means 700 comprises a cam member 710 fixed or rotating at a different speed from the rotary plate 500, and
the cam member 710 moves each of the moving members 610 to one side or other side in the radial direction when the moving member 610 of each of the one or more rotary transport units 600 rotates together with the rotary plate 500.

6. The rotary transfer device of claim 5, wherein the cam member 710 is installed at or adjacent to the rotary plate 500, and comprises a cam groove 712 where the moving member 610 is inserted,
wherein the cam groove 712 has a varying distance from the first rotation axis A1 according to angular positions about the first rotation axis A1, thereby moving each of the moving members 610 to one side or other side in the radial direction when the moving member 610 of each of the one or more rotary transport units 600 rotates together with the rotary plate 500.

7. The rotary transfer device of claim 6, wherein the cam groove 712 has a circular shape eccentric with respect to the first rotation axis A1.

8. The rotary transfer device of claim 6 or claim 7, wherein the first rotation axis A1 extends vertically,
the one or more rotary transport units 600 and the cam member 710 are installed at an upper portion of the rotary plate 500, and
the cam groove 712 is formed on an upper surface of the cam member 710.

9. The rotary transfer device of any one of claims 5 to 8, wherein each of the one or more rotary transport units 600 comprises an elastic member 640 applying pressure to the moving member 610 to other side or one side in the radial direction such that the moving member 610 is in close contact with the cam member 710.

10. The rotary transfer device of claim 9, wherein the rotation conversion means 630 comprises: a ball screw bolt 632 coupled to the moving member 610, moving together with the moving member 610 to one side or other side in the radial direction, and having threads formed on an outer circumferential surface thereof; a ball screw nut 634 threadedly engaged with the ball screw bolt 632 and coupled to the rotary member 620; and a first support member 636 coupled to the rotary plate 500 and rotatably supporting the ball screw nut 634,
the ball screw nut 634 rotates about the second rotation axis A2 along the threads and the rotary member 620 rotates together with the ball screw nut 634 when the ball screw bolt 632 moves together with the moving member 610 to one side or other side in the radial direction, and
the elastic member 640 is disposed between the moving member 610 and the first support member 636.

11. The rotary transfer device of any one of claims 1 to 4, wherein the displacement means 700 comprises one or more guide surfaces 736 rotating together with the rotary plate 500, each of the one or more guide surfaces 736 extending to one side or other side in the radial direction and guiding movement of the moving member 610 of each of the one or more rotary transport units 600 to one side or other side in the radial direction.

12. The rotary transfer device of claim 11, wherein each of the one or more guide surfaces 736 is capable of applying pressure to the moving member 610 of each of the one or more rotary transport units 600 in a circumferential direction surrounding the first rotation axis A1.

13. The rotary transfer device of any one of claims 11 and 12, wherein the displacement means 700 comprises a second support member 730 having a ring shape, and installed at and rotating together with the rotary plate 500, the second support member 730 comprising the one or more guide surfaces 736.

14. The rotary transfer device of claim 13, wherein the displacement means 700 comprises a cam member 710 fixed or rotating at a different speed from the rotary plate 500,
the cam member 710 moves each of the moving members 610 to one side or other side in the radial direction when the moving member 610 of each of the one or more rotary transport units 600 rotates together with the rotary plate 500,
the cam member 710 is installed at or adjacent to the rotary plate 500, and comprises a cam groove 712 where the moving member 610 is inserted,
the cam groove 712 has a varying distance from the first rotation axis A1 according to angular positions about the first rotation axis A1, thereby moving each of the moving members 610 to one side or other side in the radial direction when the moving member 610 of each of the one or more rotary transport units 600 rotates together with the rotary plate 500,
the first rotation axis A1 extends vertically,
the one or more rotary transport units 600 and the cam member 710 are installed at an upper portion of the rotary plate 500,
the cam groove 712 is formed on an upper surface of the cam member 710, and
the second support member 730 comprises: a support 732 disposed radially outer than the cam member 710; and a cover 734 extending radially inward from the support 732, disposed above the cam groove 712 and comprising the one or more guide surfaces 736.
